# EUROPEAN PATENT APPLICATION

(11) **EP 2 979 918 A1**
(43) Date of publication of application: **03.02.2016**
(21) Application number: 13880625.2
(22) Date of filing: 29.03.2013
(51) Int. Cl.: B60L 11/18, H01M 10/42, H01M 10/44, H01M 10/48, H02J 7/00

(54) **VEHICLE AND VEHICLE CONTROL MANAGEMENT SYSTEM**

(71) Applicant: Fujitsu Limited, Kawasaki-shi, Kanagawa 211-8588 (JP)
(72) Inventor: NAKANISHI, Masanori, Kawasaki-shi Kanagawa 211-8588 (JP); TSUKADA, Kazuyoshi, Yokohama-shi Kanagawa 222-0033 (JP); SASAKI, Jun, Yokohama-shi Kanagawa 222-0033 (JP)
(74) Representative: Hoffmann Eitle
(86) International application number: PCT/JP2013/059668
(87) International publication number: WO 2014/155716

(57) **Abstract**

A battery module (20) provided with a memory unit that stores identification information of the battery module, a motor module (40) provided with a memory unit that stores identification information of the motor module, a battery control unit (102) that controls the battery module (20), a motor control unit (103) that controls the motor module (40), and a control module (10) provided with the battery control unit (102) and the motor control unit (103) in a single module are provided. The battery control unit (102) and the motor control unit (103) respectively read the identification information of the modules (20, 40) and further load parameters for the battery module (20) and the motor module (40) corresponding to the identification information in response to activation of the control module (10).

## Description

### TECHNICAL FIELD

The present invention relates to a ridable-machine and a management system for a ridable-machine control.

### BACKGROUND

The use of lithium ion batteries (hereinafter, may be abbreviated as "LiB") having high energy density becomes mainstream for next-generation vehicles such as electric vehicles (EV) and hybrid electric vehicles (HEV). However, for reasons such as controlling battery performance deterioration and ensuring safety (such as controlling heat generation), the LiB is difficult to be charged as quickly as putting gas into a gasoline-fueled vehicle (in a few minutes, for example). As a countermeasure, a method of removing and replacing a battery module to be recharged with a full-charged battery module is proposed (see, for example, Patent Document 1 below).

### Prior Art Reference(s)

### Patent Document

Patent Document 1: US 8,164,300

### SUMMARY OF THE INVENTION

### PROBLEM TO BE SOLVED BY THE INVENTION

The next-generation motor vehicles such as EV and HEV may adopt a configuration in which three control units of a vehicle control unit (VCU), a battery control unit (BCU), and a motor control unit (MCU) are distributedly arranged in three modules, respectively. In such a case, the three control units are mutually communicably connected with, for example, CAN (Controller Area Network).

In such a configuration, MCU is fixedly matched to a motor module (MTM) and BCU is fixedly matched to a battery module (BTM). Thus, there are unique correspondences between MTM and MCU and between BTM and BCU. Hence, it is difficult to change the motor or battery from a system viewpoint. The battery and motor are main components of an electric vehicle and from the fact that it is difficult to change these components, the degree of freedom as a motor vehicle system is decreased and system choices are reduced.

An object of the present invention is to improve the degree of freedom of a system provided in a ridable-machine such as a vehicle.

### MEANS TO SOLVE THE PROBLEM

An aspect of a ridable-machine according to the present invention includes a battery module provided with a memory unit that stores identification information of the battery module, a motor module provided with a memory unit that stores identification information of the motor module, a battery control unit that controls the battery module, a motor control unit that controls the motor module, and a control module provided with the battery control unit and the motor control unit in a single module, wherein the battery control unit and the motor control unit respectively read the identification information of the modules and further load parameters for the battery module and the motor module corresponding to the identification information in response to activation of the control module.

### EFFECTS OF INVENTION

The degree of freedom of a system provided in a ridable-machine such as a vehicle is improved.

### BRIEF DESCRIPTION OF DRAWINGS

FIG. 1 is a block diagram illustrating an example of a vehicle (ridable-machine) according to an embodiment.
   FIG. 2 is a block diagram illustrating an exemplary configuration of a LiB unit illustrated in FIG. 1.
   FIG. 3 is a block diagram illustrating an exemplary configuration focusing on a battery pack illustrated in FIG. 2.
   FIG. 4 is a block diagram illustrating an exemplary configuration of a balance board illustrated in FIG. 3.
   FIG. 5 is a sequence diagram illustrating an example of a voltage and current acquisition operation by a battery monitor system illustrated in Figs. 3 and 4.
   FIG. 6 is a block diagram illustrating a comparative example of FIG. 4.
   FIG. 7 is a sequence diagram illustrating a comparative example of FIG. 5.
   FIG. 8 is a block diagram illustrating a comparative example of a vehicle configuration illustrated in FIG. 1.
   FIG. 9 is a block diagram illustrating an example of a vehicle (ridable-machine) according to an embodiment.
   FIG. 10 is a block diagram illustrating an example of a vehicle (ridable-machine) according to an embodiment.
   FIGS. 11A and 11B are sequence diagrams illustrating an example of module automatic recognition processing according to an embodiment.
   FIGS. 12A and 12B are sequence diagrams illustrating an example of a module automatic recognition processing according to another embodiment.

### MODE FOR CARRYING OUT THE INVENTION

Hereinafter, the embodiments of the present invention will be described with reference to the drawings. However, the embodiments described below are merely examples and there is no intention to exclude various modifications and technical applications that are not explicitly described below. In the drawings used in the following embodiments portions to which the same reference numerals are assigned represent the same or similar portions unless otherwise mentioned.

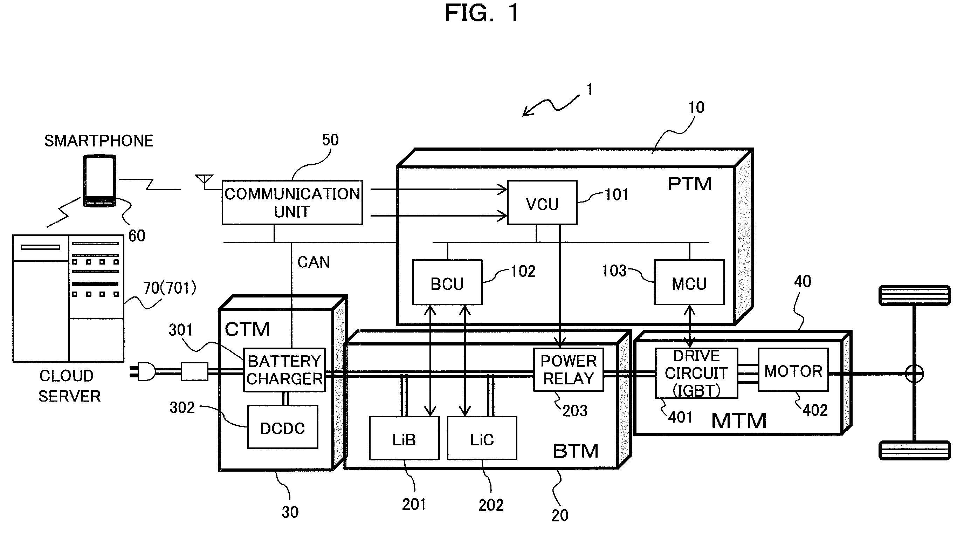

FIG. 1 is a block diagram illustrating an example of a vehicle (ridable-machine) according to an embodiment. A vehicle (ridable-machine) 1 depicted in FIG. 1 is illustratively a next-generation electric vehicle such as EV or HEV and includes a power train module (PTM) 10, a battery module (BTM) 20, a converter module (CTM) 30, and a motor module (MTM) 40.

The PTM 10 is a module that controls a power train of an EV or HEV system. The BTM 20 and the MTM 40 constitutes an example of a power system of the vehicle and the PTM 10 constitutes an example of a control system that controls the power system.

The PTM 10 and the BTM 20, and the PTM 10 and the MTM 40 can each be mutually communicably connected with an individual interface (for example, a serial peripheral interface: SPI). The PTM 10 is available to provide a control signal to the BTM 20 and/or the MTM 40 or to collect information of the BTM 20 and/or the MTM 40 through each interface.

The BTM 20 is a module that constitutes a power supply (or battery) of the EV or HEV system. The BTM 20 illustratively includes a lithium ion battery (LiB) unit 201, a lithium ion capacitor (LiC) unit 202, and a power relay 203. In the BTM 20, a sensor that senses the voltage, current, temperature or the like of the LiB unit 201 and the LiC unit 202 may appropriately be provided.

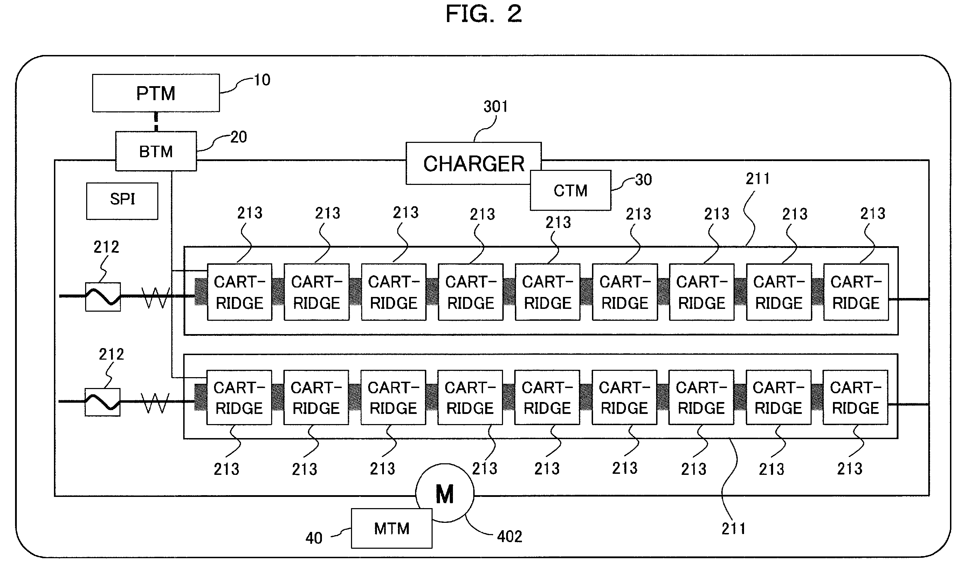

The LiB unit 201 includes, as illustrated in FIG. 2, one or more of battery packages 211 and the description thereof will be provided later.

The LiC unit 202 is connected to the LiB unit 201 in parallel to supply a current to rapid load changes and to be charged by regenerative energy. The LiC unit 202 contributes to prolonging a life of the LiB unit 201. However, the LiC unit 202 is not an essential component (may be optional).

The power relay 203 is a relay switch that supplies a high voltage of, for example, DC 200 V to 300 V to the MTM 40 and is controlled by the PTM 10. The power relay 203 is connected (ON controlled) when the voltage is normal upon an activation and is disconnected (OFF controlled) when a failure (a leak, overvoltage, over-discharge and so on) occurs.

The MTM 40 is a module that constitutes a drive system of EV or HEV. The MTM 40 illustratively includes a drive circuit 401 and a motor 402.

The drive circuit 401 generates a drive voltage (for example, DC 200 V to 300 V) of the motor 402 and supplies drive power to the motor 402 in three-phase AC. The drive circuit 401 is configured by using a switching element (high-voltage element) such as an insulated gate bipolar transistor (IGBT).

The motor 402 is, for example, a synchronous three-phase induction motor and includes a resolver (rotation angle sensor).

The CTM 30 includes a battery charger 301 and a DC-DC converter (DCDC) 302.

The battery charger 301 supports a normal charge compliant to the normal charge standard (SAE-J1772) and a quick charge compliant to the quick charge standard (CHAdeMO). The battery charger 301 may also have a function to return charge energy of the LiB unit 201 to HOME power.

The DC-DC converter 302 generates and supplies power (DC 12 V) for accessories (such as an air conditioner and a radio) of the vehicle. The DC-DC converter 302 also generates DC 12 V from DC 200 V to 300 V.

The PTM 10 includes a vehicle control unit (VCU) 101, a battery control unit (BCU) 102, and a motor control unit 103.

The VCU 101 is a control unit that controls vehicle traveling. For example, the VCU 101 performs traveling control of the vehicle 1 such as calculation of traveling torque and regeneration instructions based on the amount of stepping on the accelerator, calculation and instructions of the amount of regenerative energy based on the amount of stepping on the brake, and control of drivability.

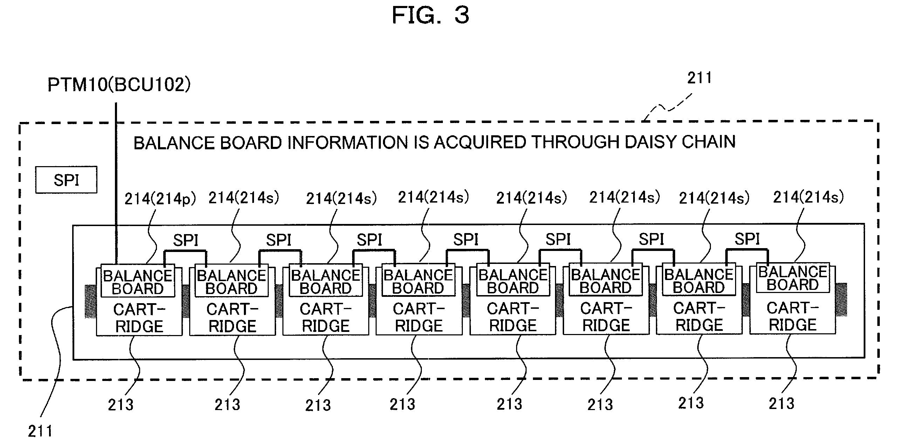

The BCU 102 is a control unit that manages and controls the LiB unit 201. For example, the BCU 102 performs input of the voltage, current, and temperature of a battery cartridge 213 as described later based on Figs. 2 and 3 and safety control thereof, balance control of the voltage between cells 241 in the battery cartridge 213, calculation of the amount of energy used and remaining energy of the battery cartridge 213, and estimation of the deterioration state of the battery cartridge 213.

The MCU 103 is a control unit that controls a motor and performs feedback control of the motor 402 based on torque instructed by the VCU 101.

The VCU 101, the BCU 102, and the MCU 103 maybe integrated into a single module. By the integration, the BTM 20 and the MTM 40 can be formed in non-intelligent modules without arithmetic processing function such as CPU or a microcomputer. Therefore, one or both of the BTM 20 and the MTM 40 can easily be changed in function or replaced.

With forming the BTM 20 and the MTM 40 in non-intelligent modules, the PTM 10 may be provided with a mechanism to automatically recognize what kind of the MTM 40 and/or the BTM 20 is connected. Accordingly, when the MTM 40 and/or the BTM 20 is changed or replaced, the PTM 10 can automatically adjust individual characteristics of the MTM 40 and the BTM 20. Details thereof will be described later.

The PTM 10 selectively and appropriately operates the control units 101 to 103 to determine whether the vehicle can travel. When the vehicle can travel, the PTM 10 inputs an accelerator position and notifies the drive circuit 401 in the MTM 40 of appropriate torque through the MCU 103. The drive circuit 401 drives the motor 402 by the IGBT which is driven in accordance with the torque instructed from the PTM 10.

The PTM 10 also collects information (sensor information) sensed by sensors (for example, a current sensor and a voltage sensor) provided inside the BTM 20 by mainly using a function of the BCU 102. Based on the collected sensor information, the PTM 10 is available to calculate and manage, for example, an overcharge, over-discharge, remaining amount, deterioration state and the like of the batteries.

A communication unit 50 may be connected to the PTM 10. The communication unit 50 is available to communicate with an external apparatus (for example, a cloud server 70) through a mobile terminal 60, for example, a mobile phone, a smartphone, or a tablet terminal, or through the Internet or the like. The cloud server 70 is illustratively provided with a storage apparatus 701.

The PTM 10 is available to provide information about vehicle conditions (for example, the charge state of the BTM 20) to the external apparatus through the communication unit 50. The PTM 10 is also available to download update information about vehicle settings from the external apparatus and to receive information (control information) about vehicle operations (for example, a air conditioner pre-control).

### (About the LiB unit 201)

Next, an exemplary configuration of the LiB unit 201 is illustrated in FIG. 2. The LiB unit 201 illustrated in FIG. 2 includes, for example, one or more of battery packages 211 and a current sensor 212 provided for each of the battery packages 211.

The battery package 211 is connected to the battery charger 301. The current sensor 212 senses a current flowing in a single battery package 211.

Each of the battery packages 211 illustratively includes a plurality (eight in the example of FIG. 2) of battery cartridges 213 connected in series. The battery cartridge 213 includes, for example, 12 battery cells (hereinafter, simply called "cells") and each of the battery cells includes, for example, eight unit cells.

The battery cartridge 213 are detachable against a storage mechanism (not illustrated) such as a battery rack provided in the vehicle in units of the cartridges 213. Thus, the battery capacity can easily be increased and decreased appropriately in units of the cartridges 213 in accordance with demands of battery characteristics corresponding to the vehicle size and the like.

The unit weight of the battery can be made lighter (for example, about 10 kg) by dividing the battery package 211 into the plurality of battery cartridges 213. Thus, a battery replacement can be made for each of the battery cartridges 213 and handling thereof by persons becomes easier. Therefore, large equipment as described in Patent Document 1 is not needed for battery replacement.

Also, the voltage of the battery cartridge 213 can be suppressed at a low voltage (for example, 50 V or less) and a high voltage system infrastructure is not necessary for a charge system (or charging station). As a result, it is possible to reduce the infrastructure cost and to promote the spread of EV.

In addition, a defect of the battery package 211 caused by the battery cartridge 213 can be repaired by only replacing the defected part in units of the battery cartridges 213. Thus, it is possible to make repairs by replacement faster and to reduce costs.

The storage mechanism may be provided with, for example, a slot available to attach and detach the battery cartridge 213 by a slide. Hence, it is possible to make the battery cartridge 213 easier to be attached and detached.

A connection mechanism may be provided in the slot. The connection mechanism can establish an electric connection between the battery cartridge 213 and the other battery cartridge 213 and between the battery cartridge 213 and the PTM 10 when the battery cartridge 213 is inserted into the slot. The connection may be a wired connection or a wireless connection. Therefore, it is possible to eliminate electric wiring. The SPI is included in the connection mechanism.

Also, a locking mechanism that mechanically fixes the battery cartridge 213 may be provided in the slot. The locking mechanism can prevent the battery cartridge from slipping out of the slot (or electrically being disconnected) due to vibration of the vehicle or the like.

Further, in the slot (and/or the battery cartridge 213), a mechanism or structure that prevents the battery cartridge 213 from being inserted into the slot in a positive and negative reversed state. Also, a mechanism that prevents intrusion of mud and water from outside may be provided in the slot (and/or the battery cartridge 213).

Each of the battery cartridges 213 includes, as illustrated in FIG. 3, a current and voltage monitor unit (hereinafter, called a "balance board") 214. The balance board (BB) 214 monitors (or measures) the current and/or voltage of a cell group forming the battery cartridge 213 in accordance with a measurement instruction (or measurement command).

One of the balance boards 214 is connected to the PTM 10 (or BCU 102) with the SPI, for example. Hereinafter, the balance board 214 connected to the PTM 10 with the SPI may be referred to as a "primary board 214p".

The balance boards 214 (hereinafter, may be referred to as "secondary boards 214s") other than the primary board 214p are connected to the primary board 214p with the SPI in a row (daisy chain connection). The balance boards 214 that are daisy-chained forms an example of the battery monitor system.

A control signal (or measurement instruction) provided to the primary board 214p from the PTM 10 (BCU 102) can successively be transferred to the secondary boards 214s through the daisy chain connection of the SPI. Also, information (for example, voltage monitor (measurement) information) obtained by the secondary boards 214s can successively be transferred to the primary board 214p through the daisy chain connection. The direction from the primary board 214p toward the last secondary board 214s in the daisy chain connection is referred to as a "downstream side" and the opposite direction thereof is referred to as an "upstream side".

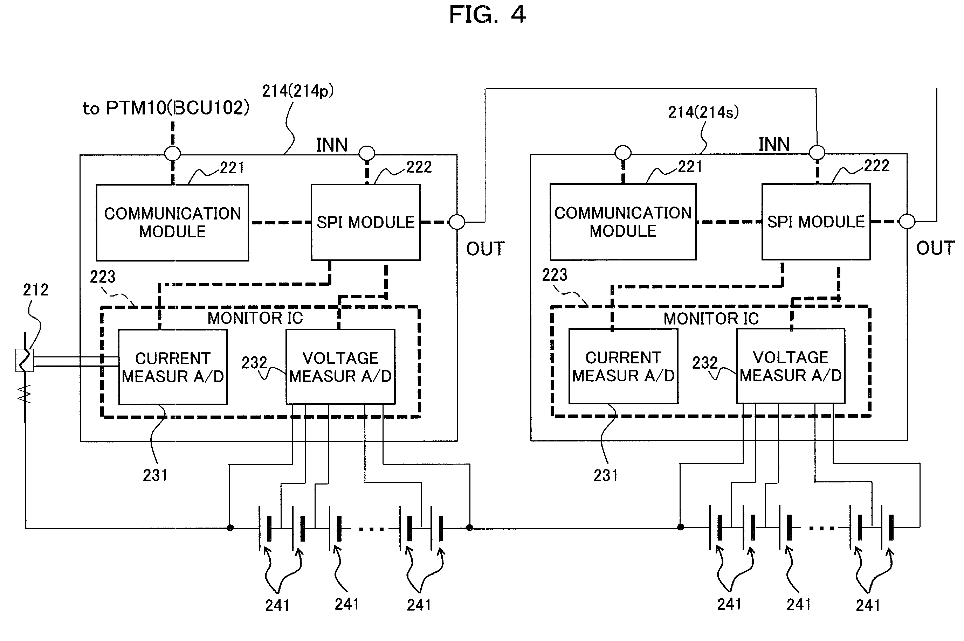

FIG. 4 illustrates an exemplary configuration of the balance board 214. The configuration of the balance board 214 may be common to the primary board 214p and the secondary board 214s. With a common configuration for each of the balance boards 214, it is possible to reduce a manufacturing cost of the battery cartridge 213. The balance board 214 depicted in FIG. 4 includes, for example, a communication module 221, an SPI module 222, and a monitor IC 223.

The communication module 221 receives a control signal from the PTM 10 (or BCU 102) by communicating with the PTM 10 (or BCU 102). The communication module 221 also sends to the PTM 10 (or BCU 102) monitor information (or measurement information) obtained by the monitor IC 223 and monitor information transferred from the other balance board 214 (in the downstream side of the daisy chain connection) to the SPI module 222.

Further, the communication module 221 transfers a received control signal to the monitor IC 223 and the other balance board 214 (in the downstream side of the daisy chain connection) through the SPI module 222. The function of the communication module 221 may be enabled in the primary board 214p and the function thereof may be disabled in the secondary board 214s. Therefore, the communication module in the secondary board 214s may be unnecessary.

The SPI module 222 is an example of the communication interface and is connected to the SPI module 222 of the other balance board 214 with the SPI to form the daisy chain. The SPI module 222 is communicably connected to the monitor IC 223 and can transfer monitor information obtained by the monitor IC 223 to the other balance board 214 (in the upstream side of the daisy chain connection) or send such information to the PTM 10 (or BCU 102) through the communication module 221.

The monitor IC 223 includes a current measurement analog/digital (A/D) converter 231 and a voltage measurement A/D converter 232. The function of the current measurement A/D converter 231 may be enabled in the primary board 214p and the function thereof may be disabled in the secondary board 214s. Therefore, the current measurement A/D converter 231 in the secondary board 214s may be unnecessary.

In other words, the primary board 214p is an example of a current and voltage measurement unit that measures the current of serially connected batteries and the voltage of a first battery in accordance with a measurement instruction. The secondary board 214s is an example of a voltage measurement unit that measures the voltage of a second battery other than the first battery in accordance with a measurement instruction.

The current measurement A/D converter 231 converts current measurement information in analog values obtained by a current sensor into digital values. The analog values are obtained by the current sensor in accordance with a current measurement instruction received from the SPI module 222 through the communication module 221 of the primary board 214p. The obtained current measurement information is transferred to the communication module 221 through the SPI module 222 and further sent to the PTM 10 (or BCU 102).

The voltage measurement A/D converter 232 receives a voltage measurement instruction transferred to each of the SPI modules 222 through the communication module 22 of the primary board 214p and converts current measurement information in analog values obtained by a voltage sensor into digital values. The obtained voltage measurement information is transferred to the other balance board 214 (in the upstream side of the daisy chain connection) through the SPI module 222 and further sent to the PTM 10 (or BCU 102) through the communication module 221.

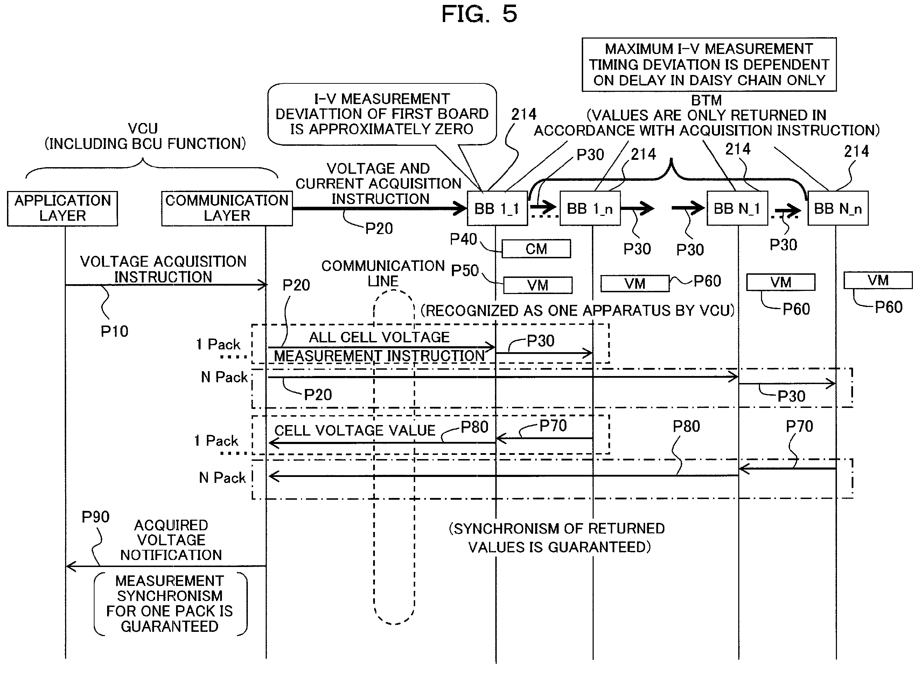

FIG. 5 illustrates an example of the voltage and current acquisition operation. When, as illustrated in FIG. 5, a voltage acquisition instruction is issued from an application layer to a communication layer of the PTM 10 (the VCU 101 and the BCU 102) (processing P10), the communication layer sends the same voltage and current acquisition (measurement) instructions (or measurement commands) to the primary boards 214p in the battery packages 211 (processing P20).

Each of the instructions is successively transferred between the daisy-chained balance boards 214 to the downstream side through the SPI in each of the battery packages 211 (processing P30). The primary board 214p having received the measurement command starts measurements of both of the voltage and current by the monitor IC 223 (the current measurement A/D converter 231 and the voltage measurement A/D converter 232) (processing P40 and P50) and returns measurement results to the PTM 10. Thus, measurement timing deviation of the voltage and current in the primary board 214 can be reduced to substantial zero.

Meanwhile, when the measurement command transferred from the balance board 214 in the upstream side is received, each of the secondary boards 214s transfers the measurement command to the balance board 214 in the downstream side. Also, a voltage measurement is started by the monitor IC 223 (voltage measurement A/D converter 232) (processing P60) and a measurement result is sent to the balance board 214 in the upstream side through the SPI (processing P70).

The balance board 214 having received the voltage measurement result from the balance board 214 in the downstream side further transfers the received voltage measurement result to the balance board 214 in the upstream side. In this way, the voltage measurement result obtained by the monitor IC 223 of each of the balance boards 214 is successively transferred to the upstream side through the daisy chain connection by the SPI. Finally, each voltage measurement result is sent to the PTM 10 (the application layer thereof) through the primary board 214 (processing P80 and P90).

In the single battery package 211, therefore, the maximum deviation between the current measurement timing in the primary board 214p and the voltage measurement timing in each of the secondary boards 214s is a delay caused by the daisy chain connection. The delay caused by the daisy chain connection can be made sufficiently smaller than when the measurement command is sent sequentially (or cyclically) to each balance board 214. Hence, a synchronism (or simultaneity) of the current measurement result and voltage measurement result returned to the PTM 10 can be improved and an accuracy of "electric power cost" calculation can be improved.

In addition, the control for balance adjustments of voltage differences between the battery cartridges 213 can be performed more correctly. That is, voltage information measured in each of the battery cartridges 213 and having almost no temporal deviation is checked by the PTM 10 and a control signal that minimizes voltage differences between the battery cartridges 213 can successively be transferred to the secondary boards 214s from the PTM 10 (or BCU 102) through the primary board 214p.

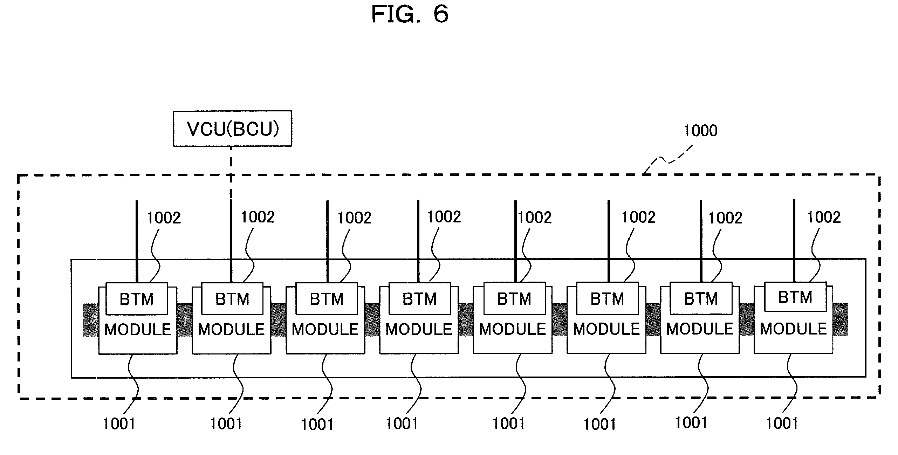

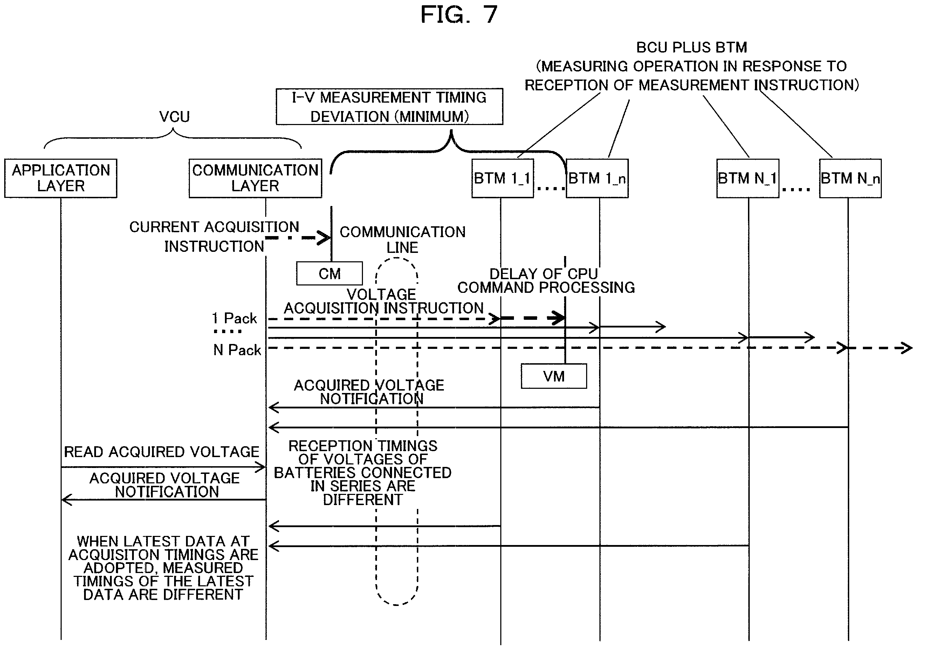

Comparative examples are illustrated in Figs. 6 and 7. A battery for EV includes a few tens of series cells and measures the voltage and current by the voltage sensor connected to each battery cell and the current sensor (generally a single sensor for the battery system) common to all battery cells.

For voltage measurement, due to restrictions of voltage measurement means (for example, a voltage resistance of a semiconductor device), a plurality of voltage measurement boards (battery management: BTM) is used. That is, in a battery package 1000, as illustrated in FIG. 6, each battery module 1001 includes a battery management 1002 including an arithmetic processing function (function corresponding to the BCU 102) such as a CPU or a microcomputer. Thus, voltage measurements can be made periodically and independently in the timing specific to each of the battery management units 1002.

Therefore, as illustrated in FIG. 7, a deviation between the current measurement timing and voltage measurement timing is occurred and a simultaneity of current measurement and voltage measurement is not ensured. Exemplary factors causing the deviation can be set out below:
(1) Deviation of sending timings of a current measurement command and a voltage measurement command from VCU (or BCU)
(2) Command arrival time from VCU (or BCU) to the battery management 1002
(3) Processing time period from the time when the battery management 1002 receives a command until the time when the voltage measurement is started (or voltage acquisition instruction is sent).

Also, a deviation of voltage measurement timing between the battery management units 1002 in the single battery package 1000 is occurred. Thus, in VCU (or BCU), the reception timings of voltage measurement results in the single battery package 1000 are varied for the respective battery packages 1000.

If information to identify the measurement timing such as a time stamp is assigned to a voltage measurement result, a voltage measurement result of the voltage measurement timing matching the current measurement timing can be used for the "electric power cost" calculation, but the processing would be complicated.

In the comparative examples depicted in Figs. 6 and 7, as described above, the simultaneity of current measurement and voltage measurement is not ensured, and therefore, a power that is different from an actual power is obtained as a calculated value and also an error appears in an impedance calculation, which is one of indicators to grasp a degraded state of the battery. As a result, it is difficult to perform correct "electric power cost" calculations and to grasp the battery state. In addition, voltage balance adjustments between the balance boards 214 cannot be made correctly.

### (About the PTM 10)

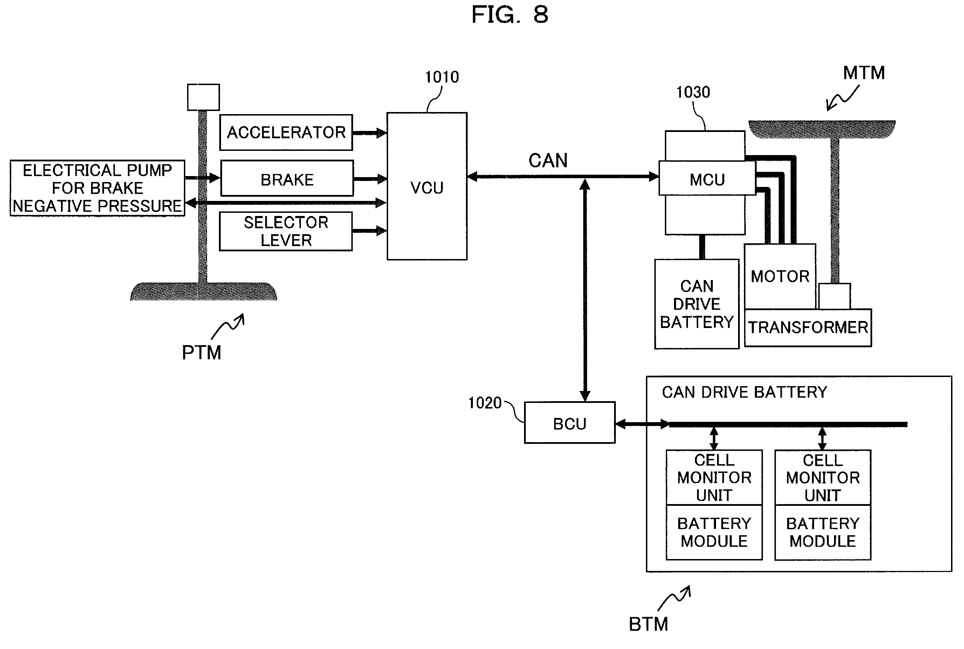

A certain motor vehicle system such as EV and HEV may adopt, as illustrated in FIG. 8, a configuration in which three control units of VCU 1010, BCU 1020, and MCU 1030 are distributedly arranged in three modules of a PTM, a MTM, and a BTM, respectively. In such a configuration, the three controls units 1010, 1020 and 1030 are mutually communicably connected with, for example, CAN (Controller Area Network).

In this configuration, the MCU 1030 is fixedly matched to MTM and the BCU 1020 is fixedly matched to BTM. Thus, there are unique correspondences between MTM and the MCU 1030 and between BTM and BCU 1020. Hence, it is difficult to change the motor or battery from a system viewpoint. The battery and motor are main components of an electric vehicle and from the fact that it is difficult to change these components, the degree of freedom as a system is decreased and system choices are reduced.

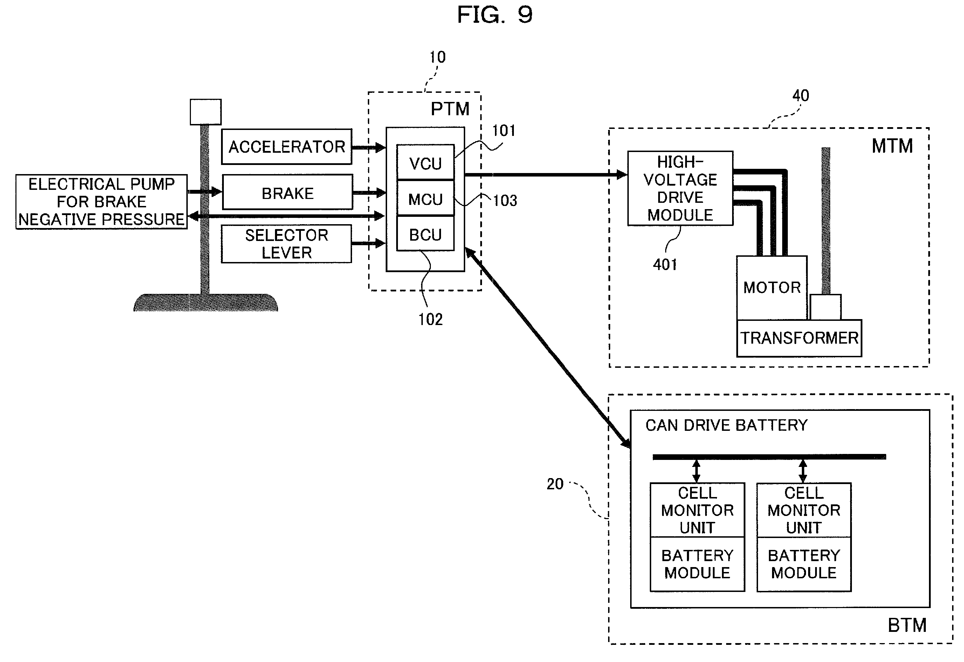

In contrast, the PTM 10 in the present embodiment has, as described with reference to FIG. 1, three control units of the VCU 101, the BCU 102, and the MCU 103 that are integrated in a single control unit (see FIG. 9). Accordingly, in terms of cost, installation location and installability, the present embodiment is advantageous to the configuration in which three control units are distributedly arranged.

With the integration of control units, the BTM 20 and the MTM 40 may be unnecessary to include an arithmetic processing function such as a CPU or a microcomputer and can be configured in a non-intelligent configuration like that of a sensor or an actuator. With the non-intelligent configurations of BTM 20 and the MTM 40, it is possible to increase choices of modules connected to the PTM 10.

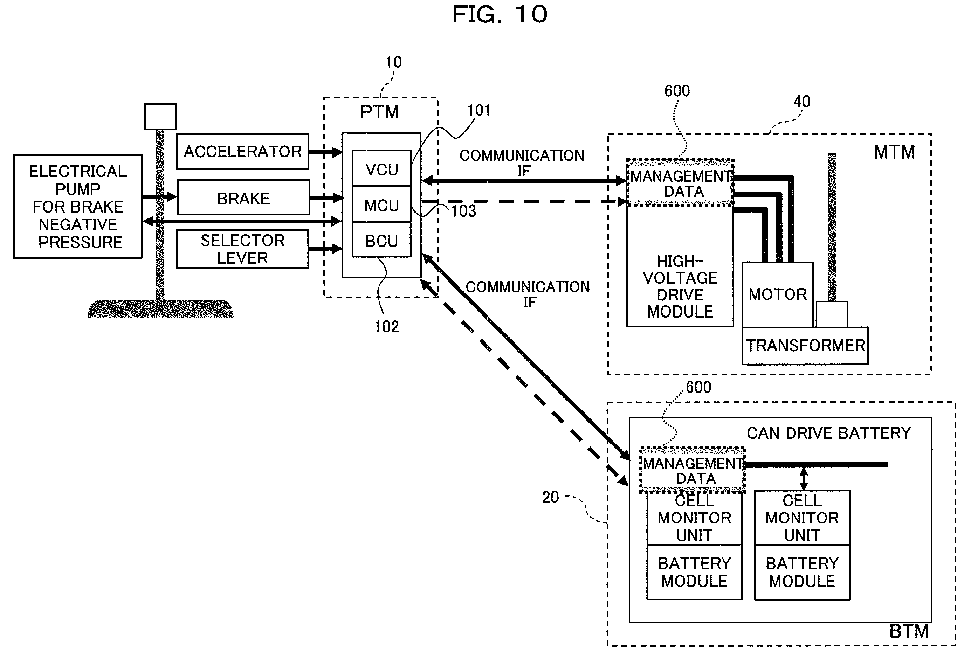

Thus, the PTM 10 is not needed for configuration settings in the system by automatically recognizing the connected module. The automatic recognition is achieved by, as illustrated in FIG. 10, storing management data in a memory 600 provided in each of the modules 20 and 40 and reading out the management data by the PTM 10 from the memory 600 through a predetermined communication interface (for example, SPI) in response to an activation of the PTM 10.

By automatically recognizing the connected modules 20 and/or 40 based on the management data, the PTM 10 is available to automatically set a characteristic matching to each of the modules 20 and 40.

Examples of management data to be stored in the memory 600 include an identification code (or identification information) of the modules 20 and 40, characteristics specific to the modules 20 and 40, and data for control and diagnosis and the like. The management data is an example of parameters unique to each of the modules 20 and 40 corresponding to the identification code of each of the modules 20 and 40.

Examples of parameters of the MTM 40 include torque characteristics, speed characteristics, and resolver characteristics. Examples of parameters of the BTM 20 include the LiB type, LiB capacity, charge and discharge characteristics, temperature characteristics, charge and discharge cycle characteristics, self-discharge characteristics, and overcharge and over-discharge detection voltage.

The identification code can be assigned in units of articles of possible replacement. For example, the identification code may be assigned in units of structural elements (battery and the balance board 214) that constitute the single battery cartridge 213 or in units of the battery cartridge 213. The identification code may also be (comprehensively) assigned in units of the battery module 211. In any case, parameters corresponding to the identification code are set.

The PTM 10 can automatically recognize the change of the connected module 20 and/or 40 by reading the identification code from the memory 600 during activation. Also, the PTM 10 having recognized the change of the connected module 20 and/or 40 automatically performs characteristic matching for the changed module 20 and/or 40 and the control, diagnosis and the like by loading the management data from the memory 600.

For example, when the MTM 40 is changed, the PTM 10 can perform characteristic matching of torque characteristics, speed characteristics, and resolver characteristics of the MCU 103 for the MTM 40 based on the acquired management data. When the BTM 20 is changed, similarly the PTM 10 can automatically perform characteristic matching for the BTM 20 based on the acquired management data.

When the battery cartridge 213 in the BTM 20 is replaced, the BTM 20 can automatically perform characteristic matching for the replaced battery cartridge 213 based on, as described above, parameters corresponding to the identification code assigned to the battery cartridge 213.

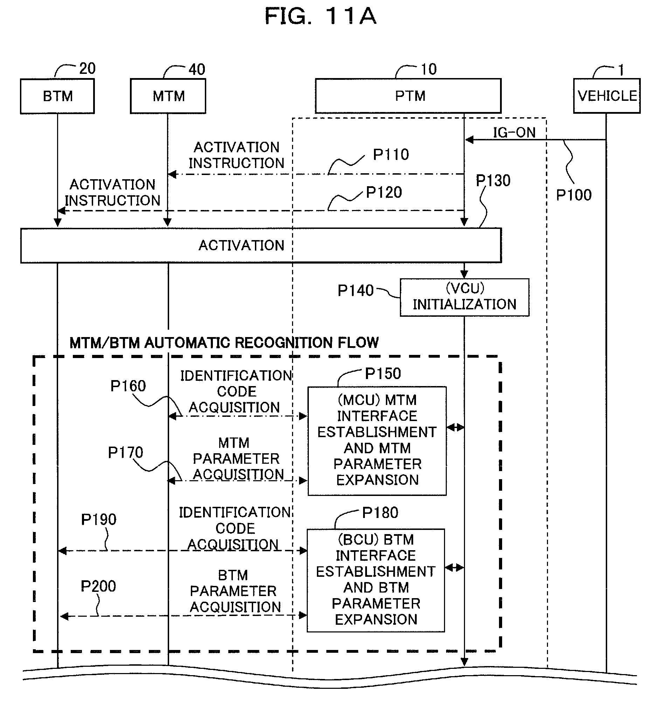

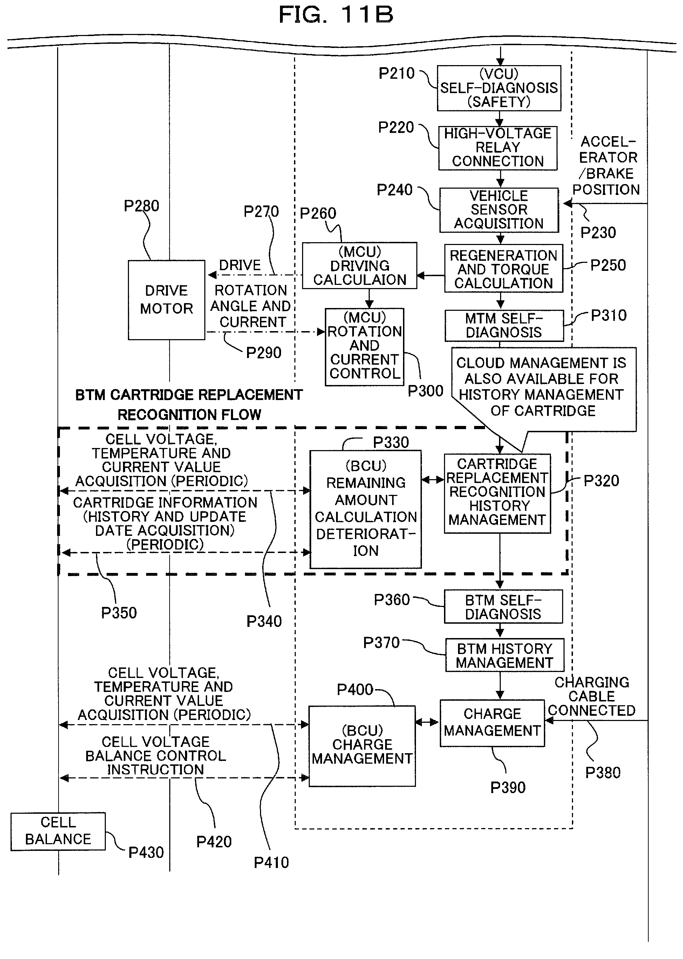

FIGS. 11A and 11B illustrate a module automatic recognition processing flow. As illustrated in FIGS. 11A and 11B, when ignition (IG) of the vehicle 1 is turned on (processing P100), the PTM 10 is activated and the PTM 10 sends an activation instruction to each of the MTM 40 and the BTM 20 (processing P110 and P120). Accordingly, the PTM 10, the MTM 40, and the BTM 20 are each in an active state (processing P130).

In the activated PTM 10, the VCU 101 is initialized (processing P140) and an MTM and BTM automatic recognition flow is performed by the VCU 101. That is, the VCU 101 establishes a communication interface with each of the MTM 40 and the BTM 20 to acquire the identification code of the MTM 40 and the identification code of the BTM 20 from the MTM 40 and the BTM 20, respectively (processing P150, processing P160, processing P180, processing P190).

When the acquired identification code is changed, the PTM 10 (VCU 101) acquires respective management data (or parameters) from the changed MTM 40 and/or BTM 20 (processing P170 and P200). The PTM 10 (VCU 101) expands the acquired management data in an internal memory or the like (processing P150 and P180). When the acquired identification code is not changed, the PTM (VCU 101) is unnecessary to acquire management data.

Then, the PTM 10 (VCU 101) performs self-diagnosis relating to safety (processing P210) and when the safety is ensured, turns on the power relay 203 (see FIG. 1) to electrically connect the BTM 20 and the MTM 40 (processing P220).

Next, the PTM 10 (VCU 101) acquires vehicle sensor information sensed by an accelerator position sensor, a brake position sensor and the like installed in the vehicle (processing P230 and P240) to perform regeneration and torque calculations (processing P250). One aspect to generate a torque instruction is to refer to a map based on the vehicle speed and strokes of the accelerator position sensor and the brake position sensor at the current time. In addition to the generation of torque for the vehicle to accelerate, depending on the motor, an instruction to recover kinetic energy (this is called regeneration) in electric energy by decelerating the vehicle can be issued. Switching between the acceleration torque and regeneration torque and absolute values thereof can be changed by inputting numerical values into the map in the aspect to generate torque by referring the map.

The calculation result is provided to the MCU 103, and the MCU 103 calculates drive control information of the motor 402 and provides the drive control information to the drive circuit 401 (see FIG. 1). The drive circuit 401 drives the motor 402 in accordance with the drive control information (processing P260 to P280).

Sensor information is provided from the resolver sensor, the current sensor and the like installed in the motor 402 to the MCU 103 in accordance with driving of the motor 402 (processing P290). Based on the sensor information, the MCU 103 performs a feedback control of the rotation amount of the motor 402 and the current flowing in the motor 402 (processing P300).

Meanwhile, the VCU 101 performs an MTM self-diagnosis (processing P310) and performs a BTM cartridge replacement recognition flow. In the MTM self-diagnosis, an MTM drive unit is provided with a function to detect a defect of the IGBT connected for an MTM control and to notify the VCU 101 of the defect. The VCU 101 is notified of the result thereof as an MTM self-diagnosis result by using an SPI communication. Meanwhile, in the BTM cartridge replacement recognition flow, the VCU 101 cooperates with the BCU 102 to perform processing such as calculations of the remaining battery amount of the LiB unit 201, deterioration estimation of the LiB unit 201, and replacement recognition and history management of the battery cartridge 213 (processing P320 and P330).

The replacement recognition of the battery cartridge 213 can be performed by assigning the identification code to each of the battery cartridges 213 (for example, by storing the identification code in a memory provided in the balance board 214) and reading out the relevant identification code by the BCU 102. In this case, based on the identification code, the PTM 10 (BCU 102) is also available to manage compatibility of the battery cartridge 213 inserted in or removed from the slot.

For example, when the battery cartridge 213 that does not satisfy a performance originally planned is inserted into the slot, the PTM 10 (BCU 102) can notify a user of incompatibility by displaying error information or the like in an on-board monitor of the vehicle. Accordingly, the vehicle manufacturer and the like can prevent the vehicle from being used a battery cartridge 213 that is not genuine product of the vehicle manufacturer.

The BCU 102 periodically acquires the cell voltage, temperature, current value and the like from the BTM 20 (LiB unit 201) (processing P340) and also periodically acquires cartridge information (history, update dates and the like) (processing P350) .

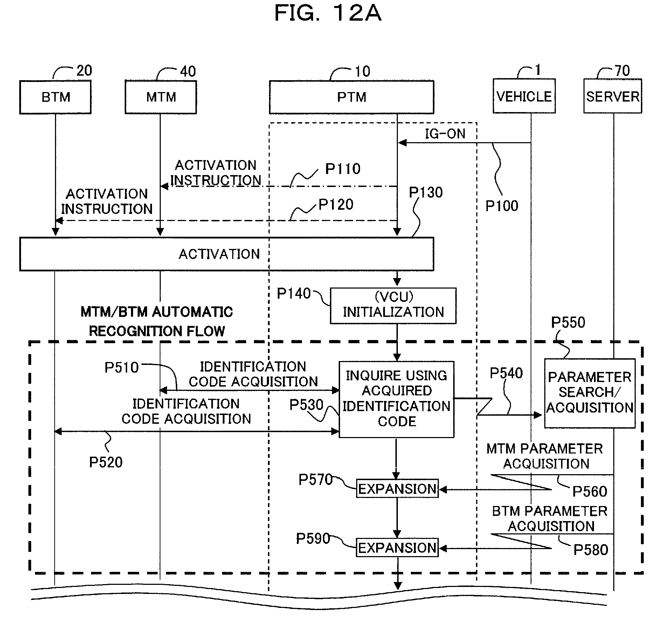

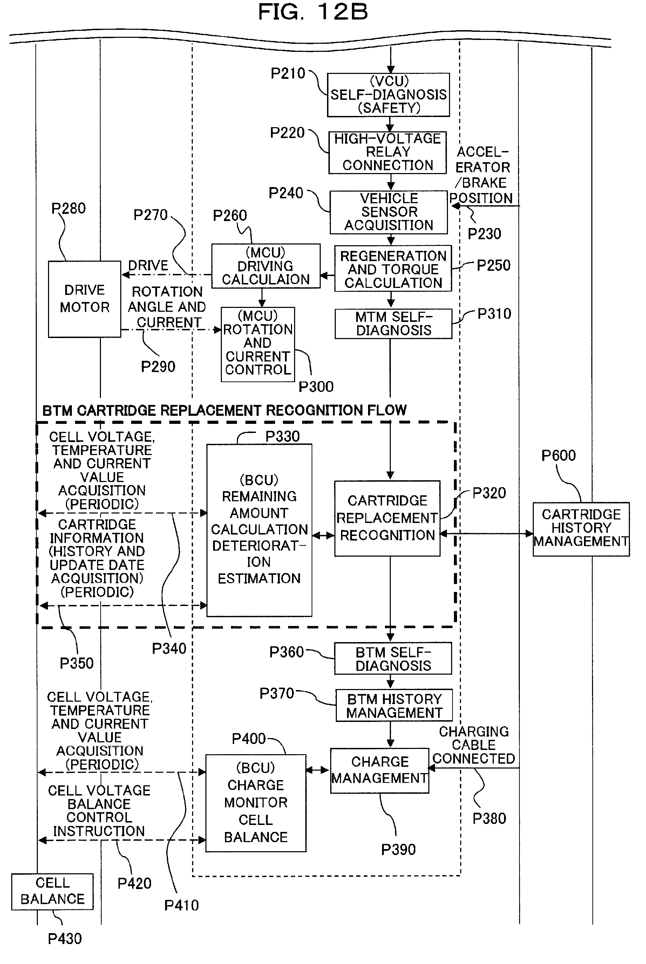

The BCU 102 calculates the remaining battery amount of the LiB unit 201 based on the acquired cell voltage, temperature, current value and the like and also estimates a deterioration state of the LiB unit 201 based on the cartridge information. The history of the battery cartridge 213 may be managed by, as will be described later with reference to FIGS. 12A and 12B, an external device such as the cloud server 70.

Meanwhile, the VCU 101 performs a BTM self-diagnosis and a BTM history management (processing P360 and P370). The "BTM self-diagnosis" checks whether or not a command from the BTM 20 is normally sent to the battery cartridge 213 for which replacement is completed and a normal response is received. Subsequently, the "BTM self-diagnosis" checks whether the voltage of each of the battery cells 241 can be acquired and determines whether the acquired value is valid based on charge state information acquired in the history management described later. At the same time, the "BTM self-diagnosis" confirms whether the current can be measured. The "BTM history management" acquires history information (serial number, assembly date, total usage time, usage cycle count, failure history, battery capacity, current charge state and the like) of the battery cartridge 213 for which replacement is completed. The "BTM self-diagnosis" conforms whether usage history is extremely different from that of the other battery cartridges 213 and whether the charge state is approximately the same. When any fault is detected, the "BTM self-diagnosis" issues a warning or instructs a re-replacement.

When a charge cable is connected (processing P380), the VCU 101 cooperates with the BCU 102 to perform charge management including monitor of the charge state and balance control of the cell voltage (processing P390 and P400).

That is, the BCU 102 periodically acquires the cell voltage, temperature, current value and the like from the BTM 20 (LiB unit 201) (processing P410) and also issues an instruction to perform balance control of the cell voltage based on these acquired parameters to the BTM 20 (the balance board 214 of the LiB unit 201) (processing P420). Accordingly, the balance control of the cell voltage is performed such that a voltage difference between the battery cells 241 in the battery cartridges 213 connected in series is eliminated (processing P430).

As described with reference to FIG. 5, since the balance boards 214 of the battery cartridges 213 are daisy-chained, the accuracy of balance control is improved. That is, voltage information measured by the battery cartridges 213 and temporally little deviated is checked by the PTM 10 and a control signal that minimizes a voltage difference in each of the battery cartridges 213 is sequentially transferred from the PTM 10 (BCU 102) to the secondary boards 214s through the primary board 214p.

By automating characteristic matching as described above, it is possible to reduce development man-hours depending on a change of a module.

Incidentally, management data may centrally be managed, for example, in a storage apparatus provided outside the vehicle and accessible (connectable) through a wired or wireless communication line so that the PTM 10 appropriately accesses the storage apparatus to download the management data from the storage apparatus. The storage apparatus is, for example, the storage apparatus 701 provided in the cloud server 70 (see FIG. 1).

FIG, 12 illustrates an example thereof (module automatic recognition processing flow according to another embodiment). As illustrated in FIGS. 12A and 12B, when ignition (IG) of the vehicle 1 is turned on (processing P100), the PTM 10 is activated and the PTM 10 sends an activation instruction to each of the MTM 40 and the BTM 20 (processing P110 and P120). Accordingly, the PTM 10, the MTM 40, and the BTM 20 are each in an active state (processing P130).

In the activated PTM 10, the VCU 101 is initialized (processing P140) and an MTM and BTM automatic recognition flow is performed by the VCU 101. That is, the VCU 101 establishes a communication interface with each of the MTM 40 and the BTM 20 to acquire the identification code of the MTM 40 and the identification code of the BTM 20 from the MTM 40 and the BTM 20, respectively (processing P510 and P520).

When the acquired identification code is changed, the PTM 10 (VCU 101) sends the changed identification code to the cloud server 70 to make an inquiry (processing P530). The cloud server 70 searches the storage apparatus 701 for management data (parameters) of the MTM 40 and/or BTM 20 corresponding to the received identification code (processing P540 and P550) and sends the acquired management data (MTM parameters and/or BTM parameters) to the vehicle 1 (processing P560 and P580).

The acquired management data may be sent after the cloud server 70 performs a security authentication by confirming that the vehicle 1 is a registered vehicle based on the identification code received from the vehicle 1. The identification of the vehicle 1 in the security authentication can be achieved by, for example, extending the identification code so that information available to identify an article can be specified in the extended code.

The vehicle 1 (PTM 10) expands the management data received (downloaded) from the cloud server 70 in an internal memory or the like (processing P570 and P590). When the acquired identification code is not changed, the PTM (VCU 101) does not need to perform the acquisition of the management data from the cloud server 70.

Hereinafter, processing similar to the processing P210 to P430 illustrated in FIGS. 11A and 11B is performed. However, in the "BTM cartridge replacement recognition flow" (processing P320 to P350), the history management of the battery cartridge 213 may be performed in the cloud server 70 (processing P600).

### (Others)

A power system having the BTM 20 and the MTM 40 that are made non-intelligent and a control system using the PTM 10 in which the VCU 101, the BCU 102, and the MCU 103 are integrated in the single module are also applicable to ridable-machines having a battery module configured by integrating a plurality of batteries in a single module.

Further, in the above embodiments, examples in which the battery monitor system and the integrated control unit (PTM 10) are applied to the motor vehicle (vehicle 1) such as EV and HEV have been described, but the battery monitor system and the integrated control unit may also be applied to other "ridable-machines" in general such as railways and ships.

### REFERENCE NUMERALS LIST

- 1: Vehicle
- 10: Power train module (PTM)
- 101: Vehicle control unit (VCU)
- 102: Battery control unit (BCU)
- 103: Motor control unit (MCU)
- 20: Battery module (BTM)
- 201: Lithium ion battery (LiB) unit
- 202: Lithium ion capacitor (LiC) unit
- 203: Power relay
- 211: Battery package
- 212: Current sensor
- 213: Battery cartridge
- 214: Current and voltage monitor unit (balance board)
- 214p: Primary board (current and voltage monitor unit)
- 214s: Secondary board (voltage monitor unit)
- 221: Communication module
- 222: SPI module
- 223: Monitor IC
- 231: Current measurement A/D converter
- 232: Voltage measurement A/D converter
- 241: Battery cell (cell)
- 30: Converter module (CTM)
- 301: Battery charger (charger)
- 302: DC-DC converter (DCDC)
- 40: Motor module (MTM)
- 401: Drive circuit
- 402: Motor
- 50: Communication unit
- 60: Mobile terminal
- 70: Cloud server
- 701: Storage apparatus

## Claims

1. A ridable-machine comprising:
a battery module provided with a memory unit that stores identification information of the battery module;
a motor module provided with the memory unit that stores identification information of the motor module;
a battery control unit that controls the battery module;
a motor control unit that controls the motor module; and
a control module provided with the battery control unit and the motor control unit in a single module,
wherein the battery control unit and the motor control unit respectively read the identification information of the modules and further load parameters for the battery module and the motor module corresponding to the identification information in response to activation of the control module.

2. The ridable-machine according to claim 1, wherein the battery module and the motor module are respectively provided with the parameters and
the battery control unit and the motor control unit respectively load the parameters from the battery module and the motor module after the identification information is read in response to the activation.

3. The ridable-machine according to claim 1, wherein the battery control unit and the motor control unit respectively load, after the identification information is read in response to the activation, the parameters from a storage that stores the parameters of the battery module and the motor module in association with the identification information through a communication line.

4. The ridable-machine according to any one of claims 1 to 3, wherein the battery module includes
a plurality of batteries connected in series,
a current and voltage measurement unit that measures a current of the plurality of batteries connected in series and a voltage of a first battery of the plurality of batteries in accordance with a measurement instruction, and
a plurality of voltage measurement units that measures the voltage of a second battery other than the first battery of the plurality of batteries in accordance with a measurement instruction, and wherein
the voltage measurement units are daisy-chained to the current and voltage measurement unit through a communication interface,
the current and voltage measurement unit and the voltage measurement units are provided with a battery monitor system that transfers the measurement instructions to the other voltage measurement units through the daisy chain,
the identification information is assigned to the first battery, the second battery, the current and voltage measurement unit, and the voltage measurement units individually, as a selective combination thereof, or comprehensively, and a unique parameter corresponding to the identification information is set.

5. The ridable-machine according to claim 4, wherein the identification information is individually assigned to the first battery, the second battery, the current and voltage measurement unit, and the voltage measurement units.

6. The ridable-machine according to claim 4, wherein the identification information is assigned to the first battery and the current and voltage measurement unit comprehensively and also assigned to the second and the voltage measurement units comprehensively.

7. The ridable-machine according to claim 4, wherein the identification information is comprehensively assigned to the first battery, the second battery, the current and voltage measurement unit, and the voltage measurement units.

8. A ridable-machine control management system comprising:
a battery module provided with a memory unit that stores identification information of the battery module;
a motor module that generates a drive force by receiving power from the battery module, the motor module being provided with a memory unit that stores identification information of the motor module;
a battery control unit that controls the battery module;
a motor control unit that controls the motor module; and
a control module provided with the battery control unit and the motor control unit in a single module,
wherein the battery control unit and the motor control unit respectively read the identification information of the modules in response to an activation of the control module and further load parameters from a storage that stores the parameters in association with the identification information of the battery module and the motor module through a communication line.

9. The ridable-machine according to claim 8, wherein the storage is provided in a cloud server.
